# EUROPÄISCHE PATENTANMELDUNG

(11) **EP 2 090 599 A1**
(43) Veröffentlichungstag der Anmeldung: **19.08.2009**
(21) Anmeldenummer: 08101597.6
(22) Anmeldetag: 13.02.2008
(51) Int. Cl.: C08F 222/06, C08F 290/06

(54) **Copolymer mit Polyetherseitenketten und Dicarbonsäurederivatbausteinen**

(71) Anmelder: Construction Research and Technology GmbH, 83308 Trostberg (DE)
(72) Erfinder: Lorenz, Klaus, Dr., 84539, Zangberg (DE); Albrecht, Gerhard, Dr., 83342, Tacherting (DE); Mack, Helmut, Dr., 83278, Traunstein (DE); Flakus, Silke, Dr., 83308, Trostberg (DE); Wagner, Petra, 83308 Trostberg (DE); Scholz, Christian, 83308 Trostberg (DE); Wimmer, Barbara, 83342 Tacherting (DE); Hartl, Angelika, 83342 Emertsham (DE); Winklbauer, Martin, 84553 Halsbach (DE)
(74) Vertreter: Arlt, Klaus

(57) **Zusammenfassung**

Die Erfindung betrifft ein sich als Fließmittel für hydraulische Bindemittel einsetzbares Copolymer aufweisend 30 bis 47 Mol-% einer (Meth-)Allylalkoholpolyetherderivat-Struktureinheit und 53 bis 70 Mol-% einer Maleinsäurederivat-Struktureinheit.

## Beschreibung

Die vorliegende Erfindung betrifft ein Copolymer, die Herstellung des Copolymers sowie eine Baustoffmischung.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Vinyloxybutylenpoly(ethylenglykol)-Struktureinheiten aufweisen. Derartige Copolymertypen sind als Hochleistungsfließmittel weit verbreitet, da diese vorzügliche Anwendungseigenschaften aufweisen. In diesem Zusammenhang ist die Robustheit bzw. Universalität gegenüber der Verwendung verschiedener Zemente, unterschiedlichen Mischungsprozeduren sowie verschiedenen Anwendungstemperaturen besonders hervorzuheben. Der diese Hochleistungsfließmittel enthaltende Beton zeichnet sich normalerweise durch eine besonders gute Verarbeitbarkeit aus.

Das als monomeres Vorprodukt dieser Copolymere eingesetzte Vinyloxybutylenpoly(ethylenglykol) wird durch Ethoxylierung von 4-Hydroxybutylvinylether erhalten. 4-Hydroxybutylvinylether ist ein großtechnisches Folgeprodukt des Acetylens. Aufgrund der Tatsache, dass die auf Acetylen basierende Chemie (Reppe-Chemie) durch die auf Ethylen basierende Chemie weitestgehend abgelöst worden ist, ist die großtechnische Produktion von 4-Hydroxybutylvinylether an die wenigen noch Reppe-Chemie betreibenden Industriestandorte gebunden. Es ist außerdem regelmäßig davon auszugehen, dass 4-Hydroxybutylvinylether als Produkt der insbesondere aus sicherheitstechnischer Sicht aufwendigen Reppe-Chemie nicht besonders kostengünstig herstellbar ist bzw. sein wird. Das vorstehend gesagte wirkt sich entsprechend auch auf die Verfügbarkeit und die Kosten von Vinyloxybutylenpoly(ethylenglykol) sowie der entsprechenden Copolymere aus.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel/Wasserreduktionsmittel für Beton eignet.

Die Lösung dieser Aufgabe ist ein Copolymer aufweisend
i) 30 bis 47 Mol-% einer (Meth-)Allylalkoholpolyetherderivat-Struktureinheit α und
ii) 53 bis 70 Mol-% einer Maleinsäurederivat-Struktureinheit β , wobei
   die (Meth-)Allylalkoholpolyetherderivat-Struktureinheit α durch folgende allgemeine Formeln (la) und/oder (Ib) repräsentiert wird 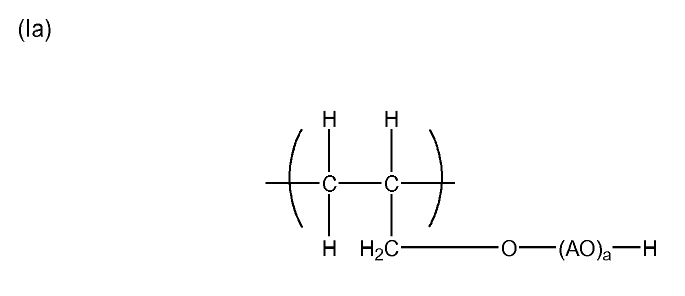 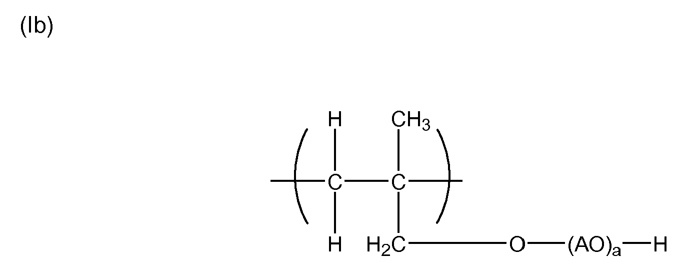 mit jeweils
   A gleich oder verschieden sowie repräsentiert durch eine Alkylengruppe gemäß CₓH₂ₓ mit x = 2, 3, 4 oder 5,
   a gleich oder verschieden sowie repräsentiert durch eine ganze Zahl zwischen 11 und 39,
   die Maleinsäurederivat-Struktureinheit β durch folgende allgemeine Formeln (IIa) und/oder (IIb) repräsentiert wird 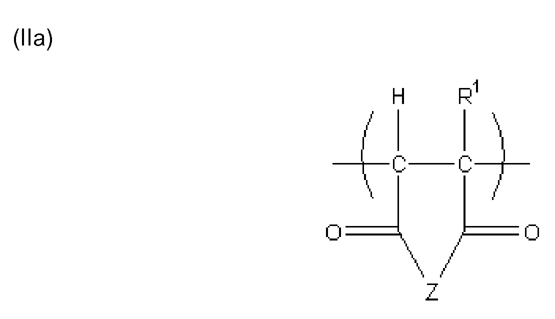 mit
   R¹ gleich oder verschieden sowie repräsentiert durch H und/oder eine unverzweigte oder verzweigte C₁ - C₄ Alkylgruppe (bevorzugt H);
   Z gleich oder verschieden sowie repräsentiert durch O und/oder NH (bevorzugt O); 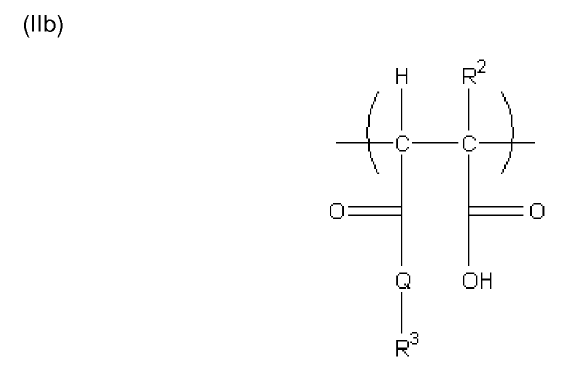 mit
   R² gleich oder verschieden sowie repräsentiert durch H und/oder eine unverzweigte oder verzweigte C₁ - C₄ Alkylgruppe (bevorzugt H);
   Q gleich oder verschieden sowie repräsentiert durch NH und/oder O;
   R³ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁴ mit m = 0, 1, 2, 3 oder 4, e = 0, 1, 2, 3 oder 4, A' = C_{x'}H_{2x'} mit x' = 2, 3, 4 oder 5 (bevorzugt x' = 2) und/oder CH₂C(C₆H₅)H-, α = eine ganze Zahl von 1 bis 350 (bevorzugt α = 15 - 200) mit R⁴ gleich oder verschieden sowie repräsentiert durch eine unverzweigte oder verzweigte C₁ - C₄ Alkylgruppe (bevorzugt CH₃).

Die Bestimmung von a (Anzahl der Alkoxygruppen) in der (Meth-)Allylalkoholpolyetherderivat-Struktureinheit α gemäß der allgemeinen Formel (la) erfolgt auf der Basis von so genannten MALDI-TOF-MS Messungen (MALDI-TOF-MS ist eine Abkürzung für Matrix Assisted Laser Desorption/Ionization Time Of Flight Massenspektroskopie). Die in diesem Zusammenhang durchgeführten MALDI-TOF-MS Messungen wurden auf einem" Bruker Reflex III" , ausgestattet mit einem 337 nm Stickstofflaser, durchgeführt. Die Beschleunigungsspannung betrug 20 kV und die Detektion der Kationenspektren erfolgte im Reflektormodus. Als Matrix wurde Dihydroxybenzoesäure (DHB) und als Salz Kaliumchlorid der Merck KGaA eingesetzt. Die Probenpräparation erfolgte als Feststoffpräparation. Hierfür wurde jeweils eine Spatelspitze der entsprechenden Probe in THF gelöst. Ein kleiner Teil der gelösten Probe wurde anschließend mit einer Spatelspitze DHB und einer Spatelspitze Kaliumchlorid in einem Mörser verrieben. Ein Teil dieser Mischung wurde mit einem Spatel auf ein Probentarget aufgetragen. Die Kalibrierung erfolgte mit einem externen Standard, welcher sich aus folgenden Peptiden zusammensetzte (Pepmix): 10 pm/µ I Bradikinin, 10 pm/µ I Angiotensin I, 10 pm/µ I Angiotensin II, 10 pm/µ I Neurotensin und10 pm/µ I ACTH. Die Peptide wurden in einem Gemisch aus 20 Gew.-% Acetonitril, 79,9 Gew.-% H₂O und 0,1 Gew.-% Ameisensäure gelöst. Der Pepmix wird zusätzlich mit H₂O verdünnt. Für die Kalibrierung wurde 1 µ I Pepmix mit 1 µ I DHB-Lösung auf einem Spot des Targets gemischt. Als Lösungsmittel für die DHB-Lösung wurde ein Methanol-Wasser Gemisch im Verhältnis 1:1 verwendet. Die Konzentration betrug 10 mg/ml.

Die (Meth-)Allylalkoholpolyetherderivat-Struktureinheit α ist maßgeblich an der Dispergierwirkung des Copolymers beteiligt. Das Vorprodukt der entsprechenden monomeren Ausgangsverbindung ist Allylalkohol und/oder Methallylalkohol. Letztere sind Produkte der olefinischen Chemie. Allylalkohol fällt beispielsweise in großen Mengen als Zwischenprodukt bei der Glycerinherstellung an. Allgemein kann gesagt werden, dass Allylalkohol als ein in großen Mengen verfügbares und preisgünstiges Zwischenprodukt der chemischen Industrie angesehen werden kann. Weiterhin weist ein Mol Methallylalkohol bzw. ein Mol Allylalkohol jeweils ein geringeres Volumen und eine geringere Masse als vergleichsweise ein Mol 4-Hydroxybutylvinylether auf, was in großtechnischer Hinsicht bezüglich Lagerung und Transport ein erheblicher Vorteil ist. Aus dem vorstehend gesagten folgt eine entsprechend hohe wirtschaftliche Attraktivität der erfindungsgemäßen Copolymere, welche auf alkoxyliertem (Meth-)Allylakohol basieren. Zusätzlich ist wesentlich, dass die erfindungsgemäßen Copolymere die vorzüglichen Anwendungseigenschaften der Hochleistungsfließmittel aufweisen, welche vorstehend beschrieben sind.

Schließlich sollte bezüglich der Herstellung des Copolymers (Polymerisationsprozess) erwähnt sein, dass alkoxylierter (Meth-)Allylalkohol aufgrund der hohen Resistenz gegenüber saurer Hydrolyse im Vergleich zu Vinyloxybutylenpoly(ethylenglykol) verfahrenstechnisch leichter handhabbar ist.

Meist wird in den die (Meth-)Allylalkoholpolyetherderivat-Struktureinheit α repräsentierenden allgemeinen Formeln (la) und (Ib) x jeweils durch 2 und/oder 3, bevorzugt 2, repräsentiert. Normalerweise liegen somit Mischungen aus Ethoxy- und Propoxyeinheiten, bevorzugt ausschließlich Ethoxyeinheiten in der Polyetherseitenkette vor.

Bevorzugt wird in den die (Meth-)Allylalkoholpolyetherderivat-Struktureinheit α repräsentierenden allgemeinen Formeln (la) und (Ib) a jeweils durch eine ganze Zahl zwischen 16 und 28 repräsentiert.

In der Regel liegt die (Meth-)Allylalkoholpolyetherderivat-Struktureinheit α mit einem relativen Anteil von 35 bis 43 Mol-% vor.

Meist ist die Maleinsäurederivat-Struktureinheit β mit einem relativen Anteil von 57 bis 65 Mol-% vorhanden.

In einer bevorzugten Ausführungsform wird die (Meth-)Allylalkoholpolyetherderivat-Struktureinheit α durch die allgemeine Formel (la) repräsentiert. Alkoxylierter Allylalkohol ist somit gegenüber alkoxyliertem Methallylalkohol das bevorzugte Vorprodukt.

Häufig wird die Maleinsäurederivat-Struktureinheit β durch die allgemeine Formel (IIb) repräsentiert, wobei jeweils R² und R³ durch H sowie Q durch O repräsentiert werden (Maleinsäure als solche liegt entsprechend als Monomer vor). Die Maleinsäurederivat-Struktureinheit β kann durch die allgemeine Formel (IIa) repräsentiert werden, wobei dann bevorzugt R¹ durch H sowie Z durch O repräsentiert werden (Maleinsäureanhydrit liegt entsprechend als Monomer vor). Der Einsatz von Maleinsäure und/oder Maleinsäureanhydrit als Comonomere ist somit bevorzugt.

Das erfindungsgemäße Copolymer weist typischerweise ein gewichtsmittleres Molekulargewicht von 10.000 bis 100.000 auf.

In der Regel liegt das erfindungsgemäße Copolymer in wässriger Lösung vor, die 30 bis 95 Gew.-% Wasser und 5 bis 70 Gew.-% gelöste Trockenmasse enthält. Die Trockenmasse besteht dann normalerweise im Wesentlichen aus dem wasserfreien Copolymer.

Das erfindungsgemäße Copolymer kann neben der (Meth-)Allylalkoholpolyetherderivat-Struktureinheit α und der Maleinsäurederivat-Struktureinheit β noch mindestens eine weitere Struktureinheit aufweisen, welche beispielsweise eine Acrylsäurestruktureinheit sein kann.

Die Erfindung betrifft außerdem die Herstellung des vorstehend beschriebenen Copolymers durch radikalische Lösungspolymerisation, wobei als Lösungsmittel Wasser eingesetzt wird, so dass eine wässrige Lösung entsteht, welche 30 bis 95 Gew.-%, bevorzugt 45 bis 65 Gew.-% Wasser und 5 bis 70 Gew.-%, bevorzugt 35 bis 55 Gew.-% Copolymertrockenmasse, enthält.

Weiterhin betrifft die Erfindung eine Baustoffmischung enthaltend das erfindungsgemäße Copolymer sowie ein hydraulisches Bindemittel und/oder ein latenthydraulisches Bindemittel.

Typischerweise liegt das hydraulische Bindemittel als Zement, Kalk, Gips, Halbhydrat oder Anhydrit oder aus Mischungen dieser Komponenten, bevorzugt jedoch als Zement vor. Das latenthydraulische Bindemittel liegt normalerweise als Flugasche, Trass oder Hochofenschlacke vor.

Die vorliegende Erfindung soll im Folgenden näher anhand von Ausführungsbeispielen beschrieben werden.

Es sollen erfindungsgemäße Copolymere (gemäß dem Herstellunsbeispiel 1) mit Copolymeren, welche bereits in der Praxis erfolgreich eingesetzt werden, (gemäß dem Vergleichsbeispiel 1) bezüglich deren Performance verglichen werden.

Herstellungsbeispiel 1 (Bsp. 1) - erfindungsgemäßer Copolymertyp 1

Ein Glasreaktor, ausgestattet mit mehreren Zulaufmöglichkeiten, Rührer, Thermometer und Tropftrichter wurde mit 100 ml Wasser und 137.8 g Polyethlenglycolmonoallylether beschickt (Lösung A) und auf 35 °C temperiert. Eine zweite vorbereitete Lösung (Lösung B) bestehend aus 59 g Wasser und 19,7 g Maleinsäureanhydrid sowie 33,2 ml einer 20%igen wässrigen Natriumhydroxydlösung wurden in den Glasreaktor zu Lösung 1 dosiert. Eine dritte Lösung (Lösung C), bestehend aus 7,5 g Natriumhydroxymetansulfinat-dihydrat und 42,5 g Wasser wurde vorbereitet. Anschließend wurden 100 mg Eisen-(II)-sulfat, gelöst in einigen Tropfen Wasser, sowie 12,46 g 30%ige Wasserstoffperoxydlösung zu Lösung A und B gegeben. Des Weiteren wurde die Zugabe von Lösung C, welche sich über einen Zeitraum von 2 Stunden erstreckte, zu den Lösungen A und B gestartet. Im Anschluss wurde durch Zugabe von 17,8 ml 20%iger wässriger Natriumhydroxydlösung ein pH-Wert von 6,5 eingestellt. Es wurde die wässrige Lösung eines Copolymers mit einem mittleren Molgewicht von Mw = 19000 g/mol, einer Polydispersität von 1,7 und einem Feststoffgehalt von 41,7 % erhalten. Die Ausbeute an Polymer im Vergleich zu nicht einpolymerisiertem Polyethylenglycolmonoallylether betrug 87 % (bestimmt durch Gelpermeationschromatographie).

Vergleichsbeispiel 1 (Vgl. 1) - entsprechend zu Copolymertyp 1

Käufliches Betonfließmittel Glenium^{®} 110 (von BASF Construction Polymers GmbH) auf Basis eines Copolymerisats aus Vinyloxybutylenpoly(ethylenglykol) und eines ethylenisch ungesättigten Dicarbonsärederivats - das Polymer gemäß Vergleichsbeispiel 1 weist gegenüber dem Copolymertyp 1 eine eng verwandte Polymerarchitektur auf.

Es soll zunächst das Polymerisationsverhalten bezüglich erzielter Molekulargewichtsverteilung und Umsatz betrachtet werden. Aus Tabelle 1 geht hervor, dass die Herstellung des erfindungsgemäßen Polymers mit etwas höheren Umsätzen erfolgt als die des Vergleichspolymers. Ein weiteres Kriterium für eine gute Performance im Beton ist eine hinreichend hohe mittlere Molmasse der Polymere.

**Tabelle1: Molmassen und Umsatz des Beispiel- und Vergleichspolymers**

| Polymer | M_{w} [g/mol] | Pd | Umsatz (%) |
|---|---|---|---|
| Bsp.1 | 19000 | 1,7 | 84 |
| Vgl.1 | 21500 | 1,42 | 83 |

In Tabelle 1 sind jeweils die Werte für M_{w} und für die Polydispersität (Pd) abgebildet. Das erfindungsgemäße Produkt weist eine mittlere Molmasse im Bereich des Vergleichspolymers auf. Die Polydispersität des Polymers gemäß Bsp. 1 ist nur wenig größer als die des Polymers gemäß Vgl. 1.

Zur weiteren Bewertung der Copolymere wurden Betontests durchgeführt. Die experimentellen Durchführungen sind in den Anwendungsbeispielen 1 und 2 beschrieben. Bei den Tests sollte geprüft werden, ob die erfindungsgemäßen Copolymere unter den gleichen Testbedingungen (w/z-Wert, Temperatur, Zuschläge, etc.) und bei gleicher Dosierung eine gute Performance, d.h. die gleiche Verflüssigung sowie das gleiche Fließmaß über die Zeit zeigen.

### Durchführung der Betontests:

280 kg Portlandzement (CEM I 42,5 R, Mergelstetten) wurden mit runden Zuschlägen, zusammengesetzt entsprechend der Fuller-Sieblinie mit einem Größtkorn von 16 mm, 80 kg Kalksteinmehl-Füller Calcit MS 12 und 156,8 kg Wasser, welches die erfindungsgemäßen Produkte bzw. die Vergleichsprodukte in gelöster Form enthielt, angerührt. Unmittelbar nach der Herstellung der Betonmischung erfolgten die Bestimmung des Ausbreitmaßes sowie dessen zeitliche Veränderung über einen Zeitraum von 60 Minuten.

Die Ergebnisse der Prüfung sind nachstehend tabellarisch aufgeführt.

**Tabelle 2:**

| Zusatzmittel | Feststoff [Gew.-%] | Dosierung [Gew.-%] | Fließmaß in cm nach | | | |
|---|---|---|---|---|---|---|
| | | | 0 min. | 10 min. | 30 min. | 60 min. |
| Bsp.1 | 30 | 0,19 | 62,5 | 57 | 49 | 45,5 |
| Vgl.1 | 30 | 0,18 | 60,5 | 59 | 51,5 | 48 |
| w/z = 0,48, Zement: Mergelstetten | | | | | | |

Tabelle 2 zeigt die Ergebnisse der Betontests unter Verwendung von Mergelstettenzement. Für das Beispielpolymer kann die gleiche Verflüssigung beobachtet werden und auch die Entwicklung des Fließmaßes über einen Zeitraum von 60 min ist vergleichbar.

### Gesamtfazit der Ergebnisse der Vergleichsversuche:

Die vorstehenden Versuche zeigen, dass die Qualität der Fließmittel auf Basis der erfindungsgemäßen Copolymere hervorragend ist. Die Performance ist insgesamt gesehen vergleichbar mit den sich bereits in der Praxis bewährten Hochleistungspolymeren auf Basis von Vinyloxybutylenpoly(ethylenglykol).

## Patentansprüche

1. Copolymer aufweisend
i) 30 bis 47 Mol-% einer (Meth-)Allylalkoholpolyetherderivat-Struktureinheit α und
ii) 53 bis 70 Mol-% einer Maleinsäurederivat-Struktureinheit β , wobei
die (Meth-)Allylalkoholpolyetherderivat-Struktureinheit α durch folgende allgemeine Formeln (la) und/oder (Ib) repräsentiert wird 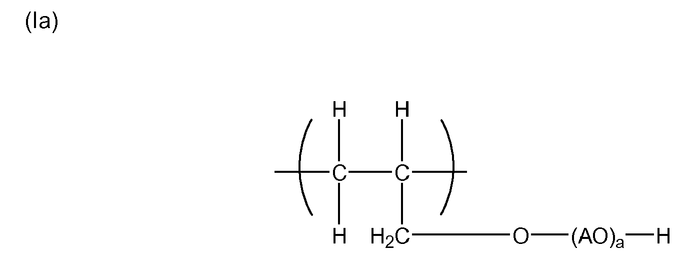 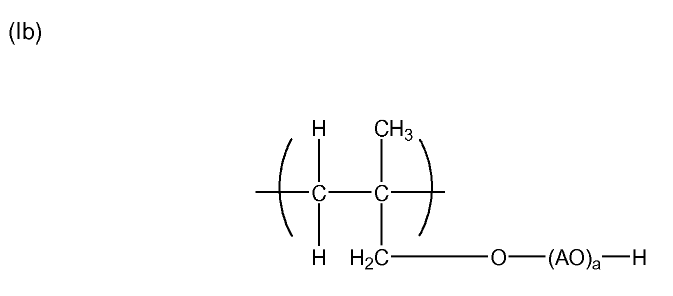 mit jeweils
A gleich oder verschieden sowie repräsentiert durch eine Alkylengruppe gemäß CₓH₂ₓ mit x = 2, 3, 4 oder 5,
a gleich oder verschieden sowie repräsentiert durch eine ganze Zahl zwischen 11 und 39,
die Maleinsäurederivat-Struktureinheit β durch folgende allgemeine Formeln (IIa) und/oder (IIb) repräsentiert wird 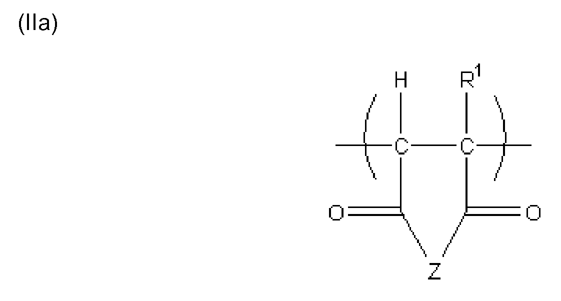 mit
R¹ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 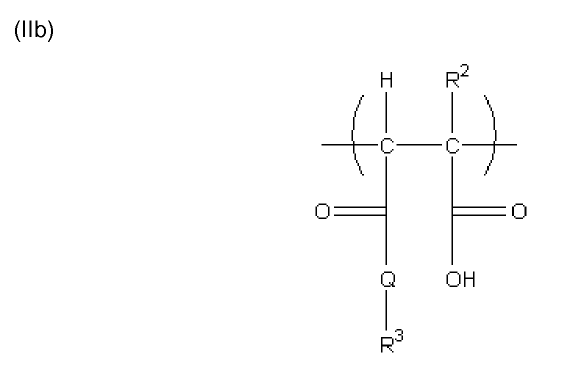 mit
R² gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R³ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁴ mit m = 0, 1, 2, 3 oder 4, e = 0, 1, 2, 3 oder 4, A' = C_{x'}H_{2x'} mit x' = 2, 3, 4 oder 5 (bevorzugt x' = 2) und/oder CH₂C(C₆H₅)H-, α = eine ganze Zahl von 1 bis 350 mit R⁴ gleich oder verschieden sowie repräsentiert durch eine unverzweigte oder verzweigte C₁ - C₄ Alkylgruppe.

2. Copolymer nach Anspruch 1, **dadurch gekennzeichnet, dass** in den die (Meth-)Allylalkoholpolyetherderivat-Struktureinheit α repräsentierenden allgemeinen Formeln (la) und (Ib) x jeweils durch 2 und/oder 3, bevorzugt 2 repräsentiert wird.

3. Copolymer nach Anspruch 1 oder 2, **dadurch gekennzeichnet, dass** in den die (Meth-)Allylalkoholpolyetherderivat-Struktureinheit α repräsentierenden allgemeinen Formeln (la) und (Ib) a jeweils durch eine ganze Zahl zwischen 16 und 28 repräsentiert wird.

4. Copolymer nach einem der Ansprüche 1 bis 3, **dadurch gekennzeichnet, dass** die (Meth-)Allylalkoholpolyetherderivat-Struktureinheit α mit einem relativen Anteil von 35 bis 43 Mol-% vorliegt.

5. Copolymer nach einem der Ansprüche 1 bis 4, **dadurch gekennzeichnet, dass** die Maleinsäurederivat-Struktureinheit β mit einem relativen Anteil von 57 bis 65 Mol-% vorhanden ist.

6. Copolymer nach einem der Ansprüche 1 bis 5, **dadurch gekennzeichnet, dass** die (Meth-)Allylalkoholpolyetherderivat-Struktureinheit α durch die allgemeine Formel (la) repräsentiert wird.

7. Copolymer nach einem der Ansprüche 1 bis 6, **dadurch gekennzeichnet, dass** die Maleinsäurederivat-Struktureinheit β durch die allgemeine Formel (IIb) repräsentiert wird, wobei jeweils R² und R³ durch H sowie Q durch O repräsentiert werden.

8. Copolymer nach einem der Ansprüche 1 bis 7, **dadurch gekennzeichnet, dass** die Maleinsäurederivat-Struktureinheit β durch die allgemeine Formel (IIa) repräsentiert wird, wobei R¹ durch H sowie Z durch O repräsentiert werden.

9. Copolymer nach einem der Ansprüche 1 bis 8, aufweisend ein gewichtsmittleres Molekulargewicht von 10.000 bis 100.000.

10. Copolymer nach einem der Ansprüche 1 bis 9, welches in wässriger Lösung vorliegt, die 30 bis 95 Gew.-% Wasser und 5 bis 70 Gew.-% gelöste Trockenmasse enthält.

11. Copolymer nach einem der Ansprüche 1 bis 10, welches neben der (Meth-)Allylalkoholpolyetherderivat-Struktureinheit α und der Maleinsäurederivat-Struktureinheit β noch mindestens eine weitere Struktureinheit aufweist.

12. Copolymer nach Anspruch 11, aufweisend als weitere Struktureinheit eine Acrylsäurestruktureinheit.

13. Herstellung eines Copolymers gemäß einem der Ansprüche 1 bis 12 durch radikalische Lösungspolymerisation, wobei als Lösungsmittel Wasser eingesetzt wird, so dass eine wässrige Lösung entsteht, welche 30 bis 95 Gew.-%, bevorzugt 45 bis 65 Gew.-% Wasser und 5 bis 70 Gew.-%, bevorzugt 35 bis 55 Gew.-% Copolymertrockenmasse, enthält.

14. Baustoffmischung enthaltend Copolymer gemäß einem der Ansprüche 1 bis 12 sowie ein hydraulisches Bindemittel und/oder ein latenthydraulisches Bindemittel.

15. Baustoffmischung nach Anspruch 14, **dadurch gekennzeichnet, dass** das hydraulische Bindemittel als Zement, Halbhydrat, Anhydrit, Kalk oder Gips, bevorzugt als Zement vorliegt.

16. Baustoffmischung nach Anspruch 14, **dadurch gekennzeichnet, dass** das latenthydraulische Bindemittel als Flugasche, Trass oder Hochofenschlacke vorliegt.
